# EUROPÄISCHE PATENTSCHRIFT

(11) **EP 3 652 087 B1**
(45) Veröffentlichungstag und Bekanntmachung des Hinweises auf die Patenterteilung: **02.07.2025**
(21) Anmeldenummer: 18725533.6
(22) Anmeldetag: 18.05.2018
(51) Int. Cl.: B32B 15/085, B32B 15/09, B32B 15/20, B32B 27/32, B32B 27/36, B32B 3/26, B32B 7/12, A61J 1/03, B32B 27/08, B65D 75/32

(54) **DURCHDRÜCKVERPACKUNG SOWIE STREIFENVERPACKUNG UND LAMINAT ZUM HERSTELLEN DERSELBEN**
PRESS-THROUGH PACKAGING AND STRIP PACKAGING AND LAMINATE FOR PRODUCING THE SAME
PLAQUETTE MULTIALVÉOLAIRE AINSI QU'EMBALLAGE EN BANDE CONTINUE ET STRATIFIÉ DESTINÉ À LEUR FABRICATION

(30) Priorität: 14.07.2017 DE 102017115861
(43) Veröffentlichungstag der Anmeldung: 20.05.2020
(73) Patentinhaber: Huhtamaki Flexible Packaging Germany GmbH & Co. KG, 87671 Ronsberg (DE)
(72) Erfinder: MALOVIC, Romina, 87437 Kempten (DE); GMEINDNER, Andreas, 87634 Obergünzburg (DE); DAIDONE, Fabio, 87671 Ronsberg (DE)
(74) Vertreter: Meissner Bolte Partnerschaft mbB
(86) Internationale Anmeldenummer: PCT/EP2018/063117
(87) Internationale Veröffentlichungsnummer: WO 2019/011509

(56) Entgegenhaltungen:
- EP-A2- 1 057 744
- WO-A1-2007/042174
- DE-A1- 102008 016 033
- US-A1- 2016 374 898

## Beschreibung

Die Erfindung betrifft eine Durchdrückverpackung gemäß dem Oberbegriff von Patentanspruch 1, eine Streifenverpackung gemäß dem Oberbegriff von Patentanspruch 8 und eine Folie oder ein Laminat zum Herstellen einer solchen Durchdrückverpackung oder einer solchen Streifenverpackung gemäß dem Oberbegriff von Patentanspruch 9.

Durchdrückverpackungen sind seit geraumer Zeit, beispielsweise zum vereinzelten Verpacken von Tabletten, Kaugummis oder anderen einzelnen verpackten stückigen Gegenständen bekannt. Üblich waren zu diesem Zweck bislang beispielsweise sogenannte Blisterverpackungen, die durchsichtig oder undurchsichtig ausgestaltet waren und aus einer Kombination einer Kunststofffolie und einem zu öffnenden Aluminiumdeckel bestanden, der bei einem Öffnen der Verpackung zerstört wurde, indem der verpackte Gegenstand von der Gegenseite, d.h. von der Kunststoffseite der Verpackung her gegen die Innenseite des Aluminiumdeckels gedrückt wurde, bis dieser dem ausgeübten Druck nicht mehr standhielt und auf- oder von der Verpackung abplatzte. Als Material für solche bekannten Durchdrückverpackungen wurde in der Regel tiefgezogenes Polyvinylchlorid in einer Kombination mit Polyethylen verwendet, um vielfältiges Polyvinylchlorid zu erhalten, aus welchem der Verpackungsbehälter gebildet wurde, der sodann mit einem Aluminiumdeckel verschlossen wurde. Zu diesem Zweck war der Aluminiumdeckel einseitig mit einer dünnen Siegelschicht, beispielsweise aus Polyethylen, beschichtet, die mittels eines Primers oder Klebstoffs oder sonstigen Haftvermittlers mit der Aluminiumschicht des Aluminiumdeckels verbunden war.

Diesbezüglich sei beispielsweise auf die in den Veröffentlichungen EP 1 057 744 A2 oder DE 10 2008 016 033 A1 beschriebenen kindersicheren Verpackungen für Tabletten oder Medikamente oder die selbstklebende Medikamentenverpackung gemäß der US 2016/0374898 A1 oder das in der WO 2007/042174 A1 (Basis für den Oberbegriff der Ansprüche 1 und 9) offenbarte kaltverformbare Laminat für Blisterbodenteile für Verpackungen für pharmazeutische Produkte hingewiesen.

Derartige bisher bekannte Durchdrückverpackungen weisen mehrere Nachteile auf. So ist zum Öffnen solcher bekannter Verpackungen ein erheblicher Kraftaufwand notwendig, da der Aluminiumdeckel durchbrochen werden musste, dieser jedoch aufgrund seiner Metallstruktur und seiner Dicke, die allerdings notwendig ist, um eine stabile Durchdrückverpackung gemäß dem bisher bekannten Aufbau zu erzeugen, eine hohe Stabilität, Steifigkeit und Durchdrückbeständigkeit aufwies.

Ein weiterer, wesentlicher Nachteil dieser bisher bekannten Durchdrückverpackungen besteht ferner in der Notwendigkeit eines teuren Materialeinsatzes, nämlich der Verwendung einer Aluminiumfolie in hoher Schichtdicke sowie ferner in der Tatsache, dass vielfältige unterschiedliche Materialien, wie beispielsweise Kunststoffe in Kombination mit Aluminium zum Einsatz kommen, die aufgrund ihrer Heterogenität, aber auch der hohen Schichtdicke des Aluminiums schwierig zu recyceln sind. Darüber hinaus besteht aufgrund des notwendigen Primer-, Lack- oder Klebereinsatzes, der notwendig ist, um den Aluminiumdeckel mit dem Kunststoffbehälter zu verbinden, die Gefahr einer Migration von Primer, Lack oder Klebstoff in die Verpackung hinein und/oder an das verpackte Produkt heran, was die Gefahr einer Kontamination des verpackten Produkts birgt.

Der Erfindung liegt die Aufgabe zugrunde eine Durchdrückverpackung unter Vermeidung der vorgenannten Nachteile, eine aus mehreren solchen Durchdrückverpackungen hergestellte Streifenverpackung sowie eine Folie oder ein Laminat zur Verfügung zu stellen, mit der bzw. dem eine solche Durchdrückverpackung, respektive eine aus solchen Durchdrückverpackungen hergestellte Streifenverpackung, hergestellt werden kann, die mit einem reduzierten und umweltfreundlichen Materialeinsatz gegenüber bislang bekannten Durchdrück-und Streifenverpackungen gezielt einstellbar zur Entnahme von stückigen Füllgütern zum einen kindersicher und zum anderen seniorenfreundlich gestaltet werden kann.

Diese Aufgabe wird durch eine Durchdrückverpackung gemäß Patentanspruch 1, eine Streifenverpackung gemäß Patentanspruch 8 sowie durch eine Folie oder ein Laminat zum Herstellen solcher Verpackungen gemäß Patentanspruch 9 gelöst.

Insbesondere wird die Aufgabe durch eine Durchdrückverpackung mit einer Vorder- und einer Rückwand gelöst, die entlang ihrer Längs- und ihrer Querränder miteinander verbunden sind und einen Aufnahmeraum für ein, vorzugsweise festes, insbesondere einstückiges, Füllgut definieren, wobei die Vorder- und/oder die Rückwand der Durchdrückverpackung aus einer Folie oder einem Laminat besteht/bestehen und die Folie oder das Laminat eine, vorzugsweise mechanisch erzeugte, Materialschwächung aufweist.

Ein wesentlicher Punkt der Erfindung liegt darin, dass sowohl zur Herstellung der Vorder- als auch der Rückwand der erfindungsgemäßen Durchdrückverpackung eine Folie oder ein Laminat verwendet wird, das eine, vorzugsweise mechanisch erzeugte, Materialschwächung aufweist. Auf diese Weise ist es erfindungsgemäß möglich auf einen teuren Aluminiumdeckel zu verzichten, der bislang notwendig war, um eine bislang bekannte Durchdrückverpackungen öffnen zu können. Aufgrund der erfindungsgemäß wendeten Folie oder des erfindungsgemäß verwendeten Laminats die, bzw. das eine Materialschwächung aufweist, ist es in vorteilhafter Weise möglich anstelle des bislang notwendigen teuren Aluminiumdeckel eine kostengünstige Folie bzw. ein kostengünstiges Laminat zu verwenden, das sich aufgrund der Materialschwächung bei Druck, der vom Inneren eines Aufnahmeraums ausgehend ausgeübt wird, nicht dehnt, ohne einen Zugang zum Inneren des Aufnahmeraums zu ermöglichen, sondern aufbricht, so dass ein verpacktes Füllgut entnommen werden kann.

In vorteilhafter Weise ist die in dem erfindungsgemäß verwendeten Laminat vorgesehene Materialschwächung auf mechanische Weise angebracht. Auf diese Weise kann eine aufwändige und teure Perforierung des Laminats, beispielsweise mittels Laserstrahlen, vermieden und auf gängige mechanische Werkzeuge zurückgegriffen werden, die an üblichen Abpackmaschinen, wie beispielsweise Streifenverpackungsanlagen, ohnehin oft im Einsatz sind.

Im Übrigen sei an dieser Stelle erwähnt, dass im Rahmen dieser Erfindung, die Begriffe "Folie" und "Laminat" synonym verwendet werden, solange sich aus dem Offenbarungsgehalts der Erfindung nichts gegenteiliges oder davon Abweichendes ergibt.

Gemäß einer Ausführungsform der Erfindung erstreckt sich die Materialschwächung über einen Zentralbereich des Aufnahmeraums und/oder entlang wenigstens eines Abschnitts einer den Aufnahmeraum seitlich umgebenden Begrenzung des Aufnahmeraums. Auf diese Weise kann erfindungsgemäß gesteuert werden, wie und an welcher Stelle die den Aufnahmeraum schließende Folie aufbricht, so dass effektiv gesteuert werden kann, in welche Richtung der verpackte Gegenstand aus dem Aufnahmeraum herausgedrückt wird. In vorteilhafter Weise kann so vermieden werden, dass der zunächst verpackte Gegenstand bei einem Aufbrechen der Folie gesteuert und ungerichtet aus der Durchdrückverpackung herausgeschleudert wird, wie dies bei bislang bekannten mit einer Aluminiumfolie verschlossenen durch Verpackungen der Fall war.

In vorteilhafter Weise erstreckt sich hierbei die Materialschwächung entweder über einen Zentralbereich des Aufnahmeraums, so dass das herausgedrückte Verpackungsgut bei einer horizontal gehaltenen neuartigen Durchdrückverpackung unmittelbar unter der Verpackung zu liegen kommt, oder aber durch den sich durch das Herausdrücken ergebenden Folienspalt unmittelbar in die Hand eines Benutzers fällt. Gemäß einer alternativen Ausführungsform erstreckt sich die Materialschwächung entlang wenigstens eines Abschnitts einer den Aufnahmeraum seitlich umgebenden Begrenzung. In diesem Fall wird der sich durch das Herausdrücken ergebende Folienspalt an einer Kante bzw. einem Rand des Aufnahmeraums erzeugt, durch den wiederum das Verpackungsgut gezielt entnommen werden kann.

An dieser Stelle sei darüber hinaus ferner erwähnt, dass sich die Materialschwächung auch randseitig um den gesamten Aufnahmeraum herum erstrecken kann, so dass der Aufnahmeraum bei einem Herausdrücken des Verpackungsgut vollständig geöffnet wird, wobei ein Folienstück, das den Aufnahmeraum zunächst verschlossen hat, komplett entfernt wird bzw. werden kann oder dieses Folienstück nur mehr entlang eines Teilbereichs der Begrenzung des Aufnahmeraums mit der Durchdrückverpackung verbunden bleibt.

Erfindungsgemäß ist die Folie oder das Laminat mehrschichtig, insbesondere 3- oder 4-schichtig, ausgebildet und weist als steifste stabilitätsgebende Schicht eine Kunststoffschicht auf, die bevorzugt aus Polyethylenterephtalat hergestellt ist.

Des Weiteren besteht ein wichtiger Punkt der Erfindung ferner darin, dass nur diese steifste stabilitätsgebende Schicht der Folie, respektive des Laminats, die Materialschwächung aufweist, während die übrigen Schichten der Folie, bzw. des Laminats unverletzt sind und keine Materialschwächung aufweisen, die einem Öffnen der erfindungsgemäßen Durchdrückverpackung dient.

Erfindungsgemäß weist die Folie oder das Laminat die nachfolgend genannte Schichtenfolge auf:
(a) Polyethylenterephtalat - (c) Aluminium - (d) Polyethylen; oder
(a) Polyethylenterephtalat - (b) Polyethylen - (c) Aluminium - (d) Polyethylen.

Hierbei stellt die Polyethylenterephtalatschicht erfindungsgemäß die dem Verpackungsgut abgewandten Seite des erfindungsgemäßen Laminats dar, während bei einer fertigen Verpackung die Polyethylen- oder Surlynschicht die dem Verpackungsgut zugewandte Schicht des Laminats darstellt.

Diesbezüglich sei darauf hingewiesen, dass die Polyethylenschicht die Schicht ist, über welche die Vorder- und die Rückwand der erfindungsgemäßen Durchdrückverpackung miteinander durch Siegeln verbunden sind. Der sich hieraus ergebende wichtige Vorteil der Erfindung besteht darin, dass durch die Versiegelung der beiden Schichten, nämlich der Vorder- und der Rückwand der erfindungsgemäßen Durchdrückverpackung auf die Verwendung von Klebstoff oder Lack verzichtet werden kann, der ansonsten notwendig wäre, um die Vorderwand mit der Rückwand zu verbinden. Somit kann eine bei herkömmlichen Durchdrückverpackungen auftretende Migration von Klebstoff oder Lack aus dem Klebeflächen heraus und insbesondere in die Verpackung hinein sicher vermieden werden, da eine solche Migration bei einer reinen Versiegelung zweier Siegelschichten nicht auftritt. Eine Kontamination des Verpackungsgut mit Klebstoff oder Siegellack ist somit erfindungsgemäß sicher und dauerhaft verhindert.

Im Übrigen sei drauf hingewiesen, dass die erfindungsgemäße Folie, respektive das erfindungsgemäße Laminat, ausschließlich durch Extrusion und Zusammenführen der Schichten hergestellt ist und es sich somit um ein sogenanntes "clean laminate" handelt.

Erfindungsgemäß ist die in der erfindungsgemäßen Folie bzw. dem erfindungsgemäßen Laminat eingebettete Aluminiumschicht sehr dünn ausgebildet und dient lediglich der Erzeugung einer Hochbarriereschicht, insbesondere für alle Klimazonen, und ist deshalb sowohl in der Vorderwand als auch der Rückwand der erfindungsgemäßen Durchdrückverpackung vollflächig und durchgehend angeordnet. Die Aluminiumfolie, respektive die Aluminiumschicht, ist bei einer verschlossenen intakten Verpackung vollkommen unverletzt und dient als Barriereschicht gegenüber Gasen, nicht jedoch zur mechanischen Stabilisierung der erfindungsgemäßen Verpackung. Im Zuge einer Öffnung der erfindungsgemäßen Durchdrückverpackung wird die Aluminiumschicht gemeinsam mit den übrigen Schichten der Folie bzw. des Laminats durch ein Durchdrücken des Verpackungsgut zerstört.

Des Weiteren sei ferner darauf hingewiesen, dass die Vorderwand und die Rückwand der erfindungsgemäßen Durchdrückverpackung vorzugsweise aus jeweils demselben Material bestehen und somit jeweils sowohl dieselbe Schichtenfolge sowie dieselben Schichtdicken und Auftragsgewichte der Schichten aufweisen, wobei letztere nachfolgender Tabelle entsprechen:

| Schicht | | Schichtdicke oder Auftragsgewicht | bevorzugte Schichtdicke oder Auftragsgewicht | besonders bevorzugte Schichtdicke oder Auftragsgewicht |
|---|---|---|---|---|
| (a) | Polyethylenterephtalat | 4 - 30 µm | 6 - 25 µm | 8 - 23 µm |
| (b) | Polyethylen | 6 - 16 g/m² | 7 - 14 g/m² | 8 - 11 g/m² |
| (c) | Aluminium | 4 - 25 µm | 5 - 22 µm | 6 - 20 µm |
| (d) | Polyethylen | 6 - 50 g/m² | 8 - 45 g/m² | 10 - 40 g/m² |

Des Weiteren wird die erfindungsgemäße Aufgabe insbesondere auch durch eine Streifenverpackung gelöst, die aus einer Vielzahl von Durchdrückverpackungen gemäß vorstehenden Ausführungen zusammengesetzt ist. Die Durchdrückverpackungen sind hierbei in Längs- und/oder Querrichtung über ihre jeweiligen Verpackungskanten miteinander verbunden, wobei die Verbindungsstellen Materialschwächungen, wie beispielsweise Perforationen aufweisen können, über welche die einzelnen Durchdrückverpackungen der erfindungsgemäßen Streifenverpackung vereinzelt werden können.

Gemäß einer verkraften Ausführungsform der Erfindung besteht eine solche erfindungsgemäße Streifenverpackung beispielsweise aus zwei nebeneinander und vier in Längsrichtung zueinander angeordneten Durchdrückverpackungen, die jeweils lösbar miteinander verbunden sind. An dieser Stelle sei darauf hingewiesen, dass eine erfindungsgemäße Streifenverpackung nicht auf eine solche vorgenannte Anordnung von einzelnen Durchdrückverpackungen beschränkt ist, sondern die einzelnen Durchdrückverpackungen beliebiger Art und Anzahl zu jeweiligen Streifenverpackungen verbunden sein können.

Des Weiteren wird die erfindungsgemäße Aufgabe auch durch eine Folie oder ein Laminat zum Herstellen einer Durchdrückverpackung oder einer Streifenverpackung, jeweils gemäß vorstehenden Ausführungen gelöst, wobei die Folie oder das Laminat jeweils eine der folgenden Schichten folgen aufweist:
(a) Polyethylenterephtalat - (c) Aluminium - (d) Polyethylen; oder
(a) Polyethylenterephtalat - (b) Polyethylen - (c) Aluminium - (d) Polyethylen, wobei
die Schichten der Folie oder des Laminats vorzugsweise die folgenden Schichtdicken oder Auftragsgewichte aufweisen:

| Schicht | | Schichtdicke oder Auftragsgewicht | bevorzugte Schichtdicke oder Auftragsgewicht | besonders bevorzugte Schichtdicke oder Auftragsgewicht |
|---|---|---|---|---|
| (a) | Polyethylenterephtalat | 4 - 30 µm | 6 - 25 µm | 8 - 23 µm |
| (b) | Polyethylen | 6 - 16 g/m² | 7 - 14 g/m² | 8 - 11 g/m² |
| (c) | Aluminium | 4 - 25 µm | 5 - 22 µm | 6 - 20 µm |
| (d) | Polyethylen | 6 - 50 g/m² | 8 - 45 g/m² | 10 - 40 g/m² |

Erfindungsgemäß weist die Folie oder das Laminat in der steifsten stabilitätsgebenden Schicht, vorzugsweise in der Polyethylenterephtalatschicht, abschnittsweise Materialschwächungen auf, die so zueinander beabstandet sind, dass sich die Materialschwächung(en) im Zuge und nach der Herstellung der Durchdrückverpackung oder der Streifenverpackung über einen Zentralbereich eines/jedes Aufnahmeraums und/oder entlang wenigstens eines Abschnitts einer den jeweiligen Aufnahmeraum seitlich umgebenden Begrenzung des jeweiligen Aufnahmeraums der Durchdrückverpackung oder der Streifenverpackung erstreckt/erstrecken, so dass die erfindungsgemäße Folie oder das erfindungsgemäße Laminat unmittelbar auf herkömmlichen Streifenverpackungsanlagen zu einer erfindungsgemäßen Durchdrückverpackung verarbeitet werden kann.

Zusammenfassend kann der Kern der Erfindung somit wie folgt festgehalten werden: Die Erfindung stellt eine neuartige Folie, respektive ein neuartiges Laminat zur Verfügung, mit welchem eine Durchdrückverpackung und/oder mehrere zu einer Streifenverpackung assoziierte Durchdrückverpackungen hergestellt werden können. Die erfindungsgemäße Durchdrückverpackung ermöglicht eine gezielt einstellbare Entnahme von stückigem Füllgut und ist sowohl kindersicher als auch seniorenfreundlich handhabbar. Des Weiteren sind die einzelnen zu einer Streifenverpackung zusammengefügten Durchdrückverpackungen aufgrund der Verwendung einer an sich bekannten Streifenverpackungstechnologie einfach und gut vereinzelbar. Im Vergleich mit bisherigen Durchdrückverpackungen, wie beispielsweise Blisterverpackungen, ist die Herstellung einer erfindungsgemäßen Durchdrückverpackung mit einem reduzierten und umweltfreundlichen Materialeinsatz möglich. Des Weiteren sind die erfindungsgemäßen Durchdrückverpackungen einfach und mit einem geringen Kraftaufwand öffenbar. Die erfindungsgemäße Durchdrückverpackung weist eine gezielte mechanische Materialschwächung der Ober- und/oder der Unterfolie oder beider Folien auf, wobei die Materialschwächung bei einer gefüllten intakten Durchdrückverpackung in etwa in der Mitte des Füllguts oder an dessen Seite angeordnet ist. Der Kern der Erfindung liegt darin das Füllgut aus der erfindungsgemäßen Durchdrückverpackung und damit aus dem Laminat, respektive durch das Laminat herauszudrücken. Dies wird durch die gezielte Schwächung der Außenlage des Verbundes, d.h. der Folie bzw. des Laminats, erzielt, ohne diese Schwächung der Außenlage des Laminats die Barriereschicht verletzt. Ein wesentlicher Vorteil der Erfindung besteht ferner darin, dass diese auf bestehenden Streifenverpackungsanlagen produziert werden kann; zudem sind keine zusätzlichen Werkzeuge für die Abpackmaschinen notwendig. Die Ober- und die Unterfolie sind, wie vorerwähnt, aus dem gleichen Material hergestellt, wobei dieses Material, d.h. die erfindungsgemäße Folie sowie das erfindungsgemäße Laminat beidseitig bedruckbar sind. Die durchdrückbare Streifenverpackung ist kindersicher und seniorenfreundlich sowie ferner einfach recycelbar, da nur ein einziger Materialverbund zum Herstellen der Durchdrückverpackung verwendet ist. Die Möglichkeit der Vereinzelung der einzelnen Durchdrückverpackungen einer Streifenverpackung kann bereits im Material der Durchdrückverpackung oder der Streifenverpackung durch verschiedenste Technologien enthalten sein, d.h. es ist an den Abpackanlagen kein zusätzliches Equipment notwendig.

Weitere Ausführungsformen der Erfindung ergeben sich aus den Unteransprüchen.

Für den Fall, daß die Folie oder das Laminat noch Siegelschichten umfasst, können auch diese alternativ die Barrierefunktion übernehmen, so wie in Anspruch 14 beschrieben.

Zum erleichterten Öffnen der Verpackung kann wenigstens eine der äußeren Schichten gemäß Anspruch 15 orientiert, als in eine Richtung gestreckt, ausgebildet sein. Nachfolgend wird die Erfindung anhand von Ausführungsbeispielen beschrieben, die anhand der Abbildungen näher erläutert werden. Hierbei zeigen:
- Fig. 1: eine schematische Darstellung einer erfindungsgemäßen Streifenverpackung, die aus acht einzelnen erfindungsgemäßen Durchdrückverpackungen besteht, in Aufsicht;
- Fig. 2: eine schematische Darstellung der in Fig. 1 dargestellten Streifenverpackung in Querschnittansicht;
- Fig. 3: eine schematische Darstellung der in Fig. 1 dargestellten Streifenverpackung in Längsschnittansicht, wobei illustriert wird, in welcher Weise ein stückiges Füllgut aus der erfindungsgemäßen Streifenverpackung herausgedrückt wird; und
- Fig. 4: eine schematische Darstellung einer weiteren Ansicht, die veranschaulicht, wie ein stückiges Füllgut aus der erfindungsgemäßen Streifenverpackung herausgedrückt wird.

In der nachfolgenden Beschreibung werden für gleiche und gleich wirkende Teile dieselben Bezugsziffern verwendet.

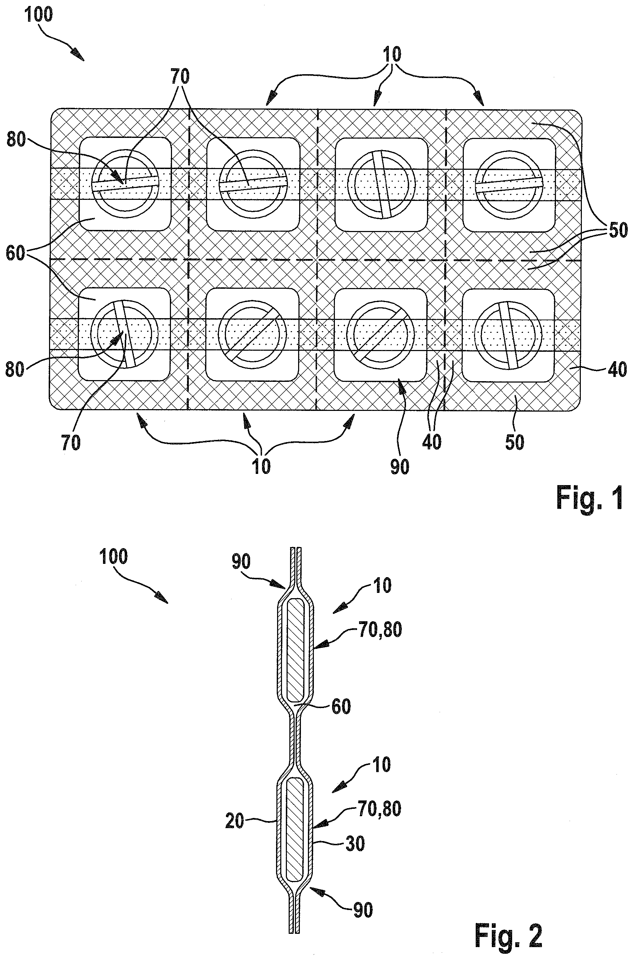

Fig. 1 zeigt eine schematische Darstellung einer erfindungsgemäßen Streifenverpackung 100, die aus insgesamt acht einzelnen Durchdrückverpackungen 10 in zwei nebeneinander angeordneten Viererreihen zusammengesetzt ist. Eine jeweilige Durchdrückverpackung 10 weist eine Vorderwand 20 sowie eine Rückwand 30 auf, die jeweils entlang ihrer Längsränder 40 und ihrer Querränder 50 so miteinander verbunden sind, dass die Durchdrückverpackung 10 einen Aufnahmeraum 60 definiert. Eine jede Durchdrückverpackung 10 weist in der äußersten Lage des Laminats, das die Vorderwand 20 und/oder die Rückwand 30 bildet, eine Materialschwächung 70 auf, die in einem Zentralbereich 80 der Durchdrückverpackung 10 angeordnet ist. Gemäß einer alternativen Ausführungsform der Erfindung kann die Materialschwächung 70 auch entlang einer Begrenzung 90, die den Aufnahmeraum 60 umgibt, angeordnet sein. Die einzelnen Durchdrückverpackungen 10 sind entlang ihrer jeweils einander zuweisenden Kanten der Längsränder 40 bzw. der Querränder 50 lösbar, d.h. vereinzelbar, miteinander verbunden.

Fig. 2 zeigt eine schematische Darstellung der in Fig. 1 dargestellten Streifenverpackung in Querschnittansicht, wobei gut zu erkennen ist, in welcher Weise das stickige Füllgut in den jeweiligen Durchdrückverpackungen angeordnet ist. Selbiges ist auch in Fig. 1 erkennbar, da die in Fig. 1 dargestellten Durchdrückverpackungen im Bereich ihrer jeweiligen Aufnahmeräume 60 transparent realisiert sind.

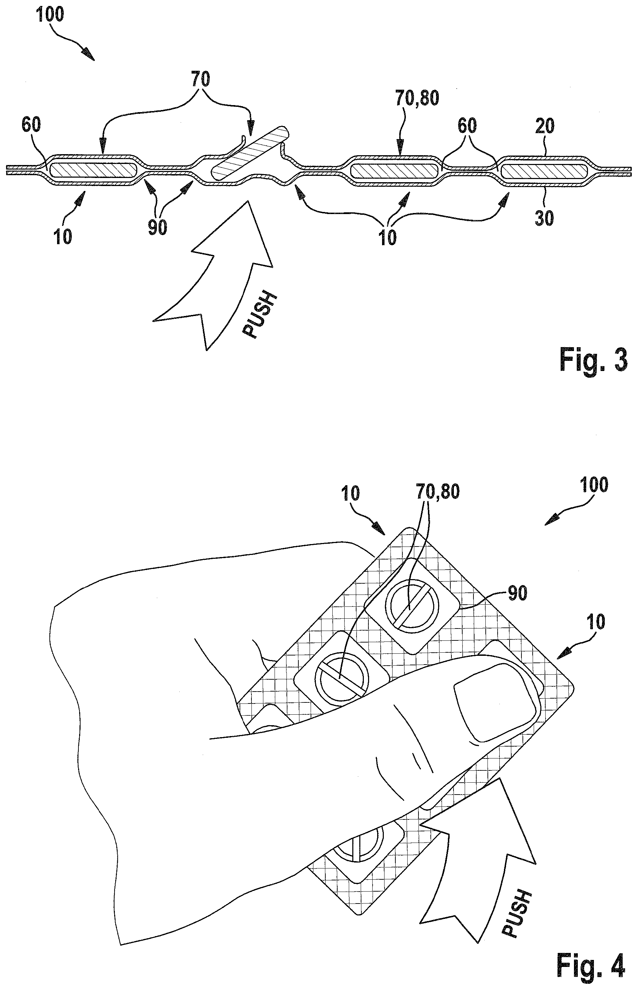

Fig. 3 zeigt eine schematische Darstellung der in Fig. 1 dargestellten Streifenverpackung in Längsschnittansicht, wobei illustriert wird, in welcher Weise ein stückiges Füllgut aus der erfindungsgemäßen Streifenverpackung herausgedrückt wird. Zu diesem Zweck wird, wie in Fig. 3 dargestellt ist, von unten ein Druck auf die erfindungsgemäße Durchdrückverpackung ausgeübt. Dies ist in Fig. 3 durch einen dicken Pfeil und das Wort "push" angedeutet. Durch den Druck auf das in Fig. 3 dargestellte untere, die erfindungsgemäße Durchdrückverpackung nach unten begrenzende Laminat, erfolgt eine Kraftübertragung auf das stückige Füllgut, das seinerseits Druck auf das in Fig. 3 oben dargestellte, die Durchdrückverpackung verschließend Laminat, ausübt, so dass sich die Oberfolie zunächst nach oben wölbt und sodann unter Freigabe des stückigen Füllguts entlang ihrer Materialschwächung 70 aufbricht.

In Fig. 4 wird dargestellt, wie ein solcher Druck, der zu einem Aufbrechen der erfindungsgemäßen Durchdrückverpackung führt, beispielsweise mit einem Daumen auch von oben auf die erfindungsgemäße Streifenverpackung 100 ausgeübt werden kann, so dass die erfindungsgemäße Durchdrückverpackung 10 das stückige Füllgut wiederum freigibt.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden, im Rahmen der beigefügten Ansprüche.

### Bezugszeichenliste

- 10: Durchdrückverpackung
- 20: Vorderwand
- 30: Rückwand
- 40: Längsrand
- 50: Querrand
- 60: Aufnahmeraum
- 70: Materialschwächung
- 80: Zentralbereich
- 90: Begrenzung
- 100: Streifenverpackung

## Patentansprüche

1. Durchdrückverpackung (10) mit einer Vorder- (20) und einer Rückwand (30), die entlang ihrer Längs- (40) und ihrer Querränder (50) miteinander verbunden sind und einen Aufnahmeraum (60) für ein, vorzugsweise festes, insbesondere einstückiges, Füllgut definieren, wobei die Vorder- (20) und die Rückwand (30) der Durchdrückverpackung (10) aus einer Folie oder einem Laminat bestehen und durch Versiegeln miteinander verbunden sind und die Folie oder das Laminat eine, vorzugsweise mechanisch erzeugte, Materialschwächung (70) aufweist, wobei die Folie oder das Laminat folgende Schichtenfolge aufweist:
(a) Polyethylenterephtalat - (c) Aluminium - (d) Polyethylen;
oder
(a) Polyethylenterephtalat - (b) Polyethylen - (c) Aluminium - (d) Polyethylen,
**dadurch gekennzeichnet, dass**
die Folie oder das Laminat als steifste stabilitätsgebende Schicht eine Kunststoffschicht aufweist und nur die steifste stabilitätsgebende Schicht der Folie oder des Laminats die Materialschwächung (70) aufweist.

2. Verpackung nach Anspruch 1,
**dadurch gekennzeichnet, dass**
sich die Materialschwächung (70) über einen Zentralbereich (80) des Aufnahmeraums (60) und/oder entlang wenigstens eines Abschnitts einer den Aufnahmeraum (60) seitlich umgebenden Begrenzung (90) des Aufnahmeraums (60) erstreckt.

3. Verpackung nach einem der vorhergehenden Ansprüche,
**dadurch gekennzeichnet, dass**
die steifste stabilitätsgebende Schicht eine Kunststoffschicht aus Polyethylenterephtalatist.

4. Verpackung nach einem der vorhergehenden Ansprüche,
**dadurch gekennzeichnet, dass**
zumindest eine der beiden gegen die Aluminiumschicht oder eine aluminiumhaltige Schicht gesiegelte Schicht als Barriereschicht ausgebildet sein kann und insbesondere auch ausgebildet ist, wenn die Aluminiumschicht oder aluminiumhaltige Schicht die Schicht mit Materialschwächung (70), z.B. in Form einer Perforation ist.

5. Verpackung nach Anspruch 4,
**dadurch gekennzeichnet, dass**
die Folie oder das Laminat folgende Schichtenfolge aufweist:
(a) Polyethylenterephtalat oder dgl. transparenter Kunststoff als Barriereschicht - (b) Polyethylen koextrudiert mit der Schicht (a) - (c) Aluminium - (d) Polyethylen
oder
(a ) Polyethylenterephtalat oder dgl. transparenter Kunststoff als Barriereschicht - (b) Polyethylen entweder auf die Schicht (a) geklebt oder extrusionskaschiert - (c) Aluminium - (d) Polyethylen.

6. Verpackung nach einem der vorhergehenden Ansprüche,
**dadurch gekennzeichnet, dass**
die Schichten der Folie oder des Laminats folgende Schichtdicken oder Auftragsgewichte aufweisen:
| | | Schichtdicke oder Auftragsgewicht | bevorzugte Schichtdicke oder Auftragsgewicht | besonders bevorzugte Schichtdicke oder Auftragsgewicht |
|---|---|---|---|---|
| (a) | Polyethylenterephtalat | 4 - 30 µm | 6 - 25 µm | 8 - 23 µm |
| (b) | Polyethylen | 6 - 16 g/m² | 7 - 14 g/m² | 8 - 11 g/m² |
| (c) | Aluminium | 4 - 25 µm | 5 - 22 µm | 6 - 20 µm |
| (d) | Polyethylen | 6 - 50 g/m² | 8 - 45 g/m² | 10 - 40 g/m² |

7. Verpackung nach einem der vorhergehenden Ansprüche,
**dadurch gekennzeichnet, dass**
die Vorder- (20) und die Rückwand (30) aus demselben Material bestehen.

8. Streifenverpackung (100) bestehend aus einer Vielzahl von Durchdrückverpackungen (10) gemäß einem der vorhergehenden Ansprüche.

9. Folie oder Laminat zum Herstellen einer Durchdrückverpackung nach einem der vorhergehenden Ansprüche 1 bis 8 oder einer Streifenverpackung (100) nach Anspruch 8, wobei
die Folie oder das Laminat folgende Schichtenfolge aufweist:
(a) Polyethylenterephtalat - (c) Aluminium - (d) Polyethylen; oder
(a) Polyethylenterephtalat - (b) Polyethylen - (c) Aluminium - (d) Polyethylen, **dadurch gekennzeichnet, dass**
die Folie oder das Laminat als steifste stabilitätsgebende Schicht eine Kunststoffschicht aufweist und nur die steifste stabilitätsgebende Schicht der Folie oder des Laminats die Materialschwächung (70) aufweist.

10. Folie oder Laminat nach Anspruch 9,
**dadurch gekennzeichnet, dass**
zumindest eine der beiden gegen die Aluminiumschicht oder eine aluminiumhaltige Schicht gesiegelte Schicht als Barriereschicht ausgebildet sein kann und insbesondere auch ausgebildet ist, wenn die Aluminiumschicht oder aluminiumhaltige Schicht die Schicht mit Materialschwächung (70), z.B. in Form einer Perforation ist.

11. Folie oder Laminat nach einem der vorhergehenden Ansprüche 9 bis 10,
**dadurch gekennzeichnet, dass**
die Schichten der Folie oder des Laminats vorzugsweise folgende Schichtdicken oder Auftragsgewichte aufweisen:
| | | Schichtdicke oder Auftragsgewicht | bevorzugte Schichtdicke oder Auftragsgewicht | besonders bevorzugte Schichtdicke oder Auftragsgewicht |
|---|---|---|---|---|
| (a) | Polyethylenterephtalat | 4 - 30 µm | 6 - 25 µm | 8 - 23 µm |
| (b) | Polyethylen | 6 - 16 g/m² | 7 - 14 g/m² | 8 - 11 g/m² |
| (c) | Aluminium | 4 - 25 µm | 5 - 22 µm | 6 - 20 µm |
| (d) | Polyethylen | 6 - 50 g/m² | 8 - 45 g/m² | 10 - 40 g/m² |

12. Folie oder Laminat nach einem der vorhergehenden Ansprüche 9 bis 11, **dadurch gekennzeichnet, dass**
die Folie oder das Laminat in der steifsten stabilitätsgebenden Schicht, vorzugsweise in der Polyethylenterephtalatschicht, abschnittsweise Materialschwächungen (70) aufweist, die so zueinander beabstandet sind, dass sich die Materialschwächung(en) (70) im Zuge und nach der Herstellung der Durchdrückverpackung (10) oder der Streifenverpackung (100) über einen Zentralbereich (80) eines/jedes Aufnahmeraums (60) und/oder entlang wenigstens eines Abschnitts einer den jeweiligen Aufnahmeraum (60) seitlich umgebenden Begrenzung (90) des jeweiligen Aufnahmeraums (60) der Durchdrückverpackung (10) oder der Streifenverpackung (100) erstreckt/erstrecken.

13. Folie oder Laminat nach einem der vorhergehenden Ansprüche 9 bis 12, **dadurch gekennzeichnet, dass**
die steifste stabilitätsgebende Schicht eine Polyethylenterephtalatschicht ist.

14. Folie oder Laminat nach einem der vorhergehenden Ansprüche 9 bis 13, **dadurch gekennzeichnet, dass**
die Folie oder das Laminat Siegelschichten umfasst, insbesondere Siegelschichten mit Barrierefunktion, wobei die Siegelschichten vorzugsweise Polyolefinschichten mit Barrierecoatings, insbesondere Cyloolefin-Copolymere (COC) -Schichten sind.

15. Folie oder Laminat nach einem der vorhergehenden Ansprüche 9 bis 14, **dadurch gekennzeichnet, dass**
wenigstens eine der äußeren Schichten, insbesondere die beim Gebrauch als Verpackungsfolie oder -laminat äußere Lage durch eine orientierte Kunststoffschicht gebildet ist.

## Claims

1. Press-through packaging (10) having a front wall (20) and a rear wall (30) which are connected to each other along their longitudinal (40) and transverse edges (50) and define a receiving space (60) for a preferably solid, in particular one-piece, filling material, wherein the front wall (20) and rear wall (30) of the press-through packaging (10) consist of a film or a laminate and are connected to each other by sealing, and the film or laminate has a preferably mechanically produced material weakening (70), wherein the film or laminate has the following layer sequence:
(a) polyethylene terephthalate - (c) aluminum - (d) polyethylene;
or
(a) polyethylene terephthalate - (b) polyethylene - (c) aluminum - (d) polyethylene,
**characterized in that**
the film or laminate comprises a plastic layer as the stiffest layer imparting stability, and only the stiffest stability-imparting layer of the film or laminate comprises the material weakening (70).

2. Packaging according to claim 1,
**characterized in that**
the material weakening (70) extends over a central region (80) of the receiving space (60) and/or along at least one section of a boundary (90) of the receiving space (60) surrounding the receiving space (60) laterally.

3. Packaging according to one of the preceding claims,
**characterized in that**
the stiffest stability-imparting layer is a plastic layer made of polyethylene terephthalate.

4. Packaging according to one of the preceding claims,
**characterized in that**
at least one of the two layers sealed against the aluminum layer or an aluminum-containing layer can be designed as a barrier layer and is in particular also designed as such if the aluminum layer or aluminum-containing layer is the layer with material weakening (70), e.g. in the form of a perforation.

5. Packaging according to claim 4, **characterized in that**
the film or laminate has the following layer sequence:
(a) polyethylene terephthalate or similar transparent plastic as a barrier layer - (b) polyethylene coextruded with the layer (a) - (c) aluminum - (d) polyethylene
or
(a) polyethylene terephthalate or similar transparent plastic as a barrier layer - (b) polyethylene either bonded to layer (a) or extrusion-laminated - (c) aluminum - (d) polyethylene.

6. Packaging according to one of the preceding claims,
**characterized in that**
the layers of the film or laminate have the following layer thicknesses or application weights:
| | Layer thickness or application weight | Preferred layer thickness or application weight | Particularly preferred layer thickness or application weight |
|---|---|---|---|
| (a) Polyethylene terephthalate | 4-30 µm | 6-25 µm | 8-23 µm |
| (b) Polyethylene | 6-16 g/m² | 7-14 g/m² | 8-11 g/m² |
| (c) Aluminum | 4-25 µm | 5-22 µm | 6-20 µm |
| (d) Polyethylene | 6-50 g/m² | 8-45 g/m² | 10-40 g/m² |

7. Packaging according to one of the preceding claims,
**characterized in that**
the front wall (20) and the rear wall (30) are made of the same material.

8. Strip packaging (100) consisting of a plurality of press-through packaging (10) according to one of the preceding claims.

9. Film or laminate for producing a press-through packaging according to one of the preceding claims 1 to 8 or a strip packaging (100) according to claim 8, wherein the film or laminate has the following layer sequence:
(a) polyethylene terephthalate - (c) aluminum - (d) polyethylene;
or
(a) polyethylene terephthalate - (b) polyethylene - (c) aluminum - (d) polyethylene,
**characterized in that**
the film or laminate has a plastic film layer as the stiffest stability-imparting layer, and only the stiffest stability-imparting layer of the film or laminate has the material weakening (70).

10. Film or laminate according to claim 9,
**characterized in that**
at least one of the two layers sealed against the aluminum layer or an aluminum-containing layer can be designed as a barrier layer and is in particular also designed as such if the aluminum layer or aluminum-containing layer is the layer with material weakening (70), e.g. in the form of a perforation.

11. Film or laminate according to one of the preceding claims 9 to 10, **characterized in that**
the layers of the film or laminate preferably have the following layer thicknesses or application weights:
| | Layer thickness or application weight | Preferred layer thickness or application weight | Particularly preferred layer thickness or application weight |
|---|---|---|---|
| (a) Polyethylene terephthalate | 4-30 µm | 6-25 µm | 8-23 µm |
| (b) Polyethylene | 6-16 g/m² | 7-14 g/m² | 8-11 g/m² |
| (c) Aluminum | 4-25 µm | 5-22 µm | 6-20 µm |
| (d) Polyethylene | 6-50 g/m² | 8-45 g/m² | 10-40 g/m² |

12. Film or laminate according to one of the preceding claims 9 to 11, **characterized in that**
the film or laminate has material weakenings (70) in sections in the stiffest stability-imparting layer, preferably in the polyethylene terephthalate layer, which are spaced apart from each other such that that the material weakening(s) (70) extend(s) in the course of and after the manufacture of the press-through packaging (10) or the strip packaging (100) over a central region (80) of one/each receiving space (60) and/or along at least one section of a boundary (90) of the respective receiving space (60) laterally surrounding the respective receiving space (60) of the press-through packaging (10) or the strip packaging (100).

13. Film or laminate according to one of the preceding claims 9 to 12, **characterized in that**
the stiffest stability-imparting layer is a polyethylene terephthalate layer.

14. Film or laminate according to one of the preceding claims 9 to 13, **characterized in that**
the film or laminate comprises sealing layers, in particular sealing layers with a barrier function, wherein the sealing layers are preferably polyolefin layers with barrier coatings, in particular cycloolefin copolymer (COC) layers.

15. Film or laminate according to one of the preceding claims 9 to 14, **characterized in that**
at least one of the outer layers, in particular the outer layer when used as a packaging film or laminate, is formed by an oriented plastic layer.

## Revendications

1. Emballage multialvéolaire (10) avec une paroi antérieure (20) et une paroi postérieure (30) qui sont reliées l'une à l'autre le long de leurs bords longitudinaux (40) et de leurs bords transversaux (50) et qui définissent un espace de logement (60) pour une matière de remplissage, de préférence solide, en particulier en un morceau, dans lequel la paroi antérieure (20) et la paroi postérieure (30) de l'emballage multialvéolaire (10) se composent d'un film ou d'un stratifié et sont assemblées l'une à l'autre par soudage et le film ou le stratifié comporte une zone d'affaiblissement du matériau (70), de préférence produite par un moyen mécanique, la feuille ou le stratifié comportant la succession de couches suivante :
(a) téréphtalate de polyéthylène - (c) aluminium - (d) polyéthylène ou
(a) téréphtalate de polyéthylène - (b) polyéthylène - (c) aluminium - (d) polyéthylène, **caractérisé en ce que** le film ou le stratifié comporte, comme couche la plus rigide conférant la stabilité, une couche de matière plastique , et seule la couche la plus rigide, conférant la stabilité, du film ou du stratifié comporte la zone d'affaiblissement du matériau (70).

2. Emballage selon la revendication 1, **caractérisé en ce que** la zone d'affaiblissement du matériau (70) s'étend par-dessus une région centrale (80) de l'espace de logement (60) et/ou le long d'au moins une section d'une délimitation (90) de l'espace de logement (60) qui entoure latéralement l'espace de logement (60).

3. Emballage selon l'une des revendications précédentes, **caractérisé en ce que** la couche la plus rigide conférant la stabilité est une couche de matière plastique faite de téréphtalate de polyéthylène.

4. Emballage selon l'une des revendications précédentes, **caractérisé en ce qu'**au moins une des deux couches soudées contre la couche d'aluminium ou une couche contenant de l'aluminium peut être, en particulier est, conçue comme une couche barrière si la couche d'aluminium ou la couche contenant de l'aluminium est la couche munie de la zone d'affaiblissement du matériau (70) prenant par exemple la forme d'une perforation.

5. Emballage selon la revendication 4, **caractérisé en ce que** le film ou le stratifié comporte la succession de couches suivante :
(a) téréphtalate de polyéthylène ou matière plastique transparente similaire servant de couche barrière - (b) polyéthylène coextrudé avec la couche (a) - (c) aluminium - (d) polyéthylène
ou
(a) téréphtalate de polyéthylène ou matière plastique transparente similaire servant de couche barrière - (b) polyéthylène collé sur la couche (a) ou laminé par extrusion - (c) aluminium - (d) polyéthylène.

6. Emballage selon l'une des revendications précédentes, **caractérisé en ce que** les couches du film ou du stratifié présentent les épaisseurs de couche ou les poids d'application suivants :
| | | Épaisseur de couche ou poids d'application | Épaisseur de couche ou poids d'application préférés | Épaisseur de couche ou poids d'application particulièrement préférés |
|---|---|---|---|---|
| (a) | Téréphtalate de polyéthylène | 4 - 30 µm | 6 - 25 µm | 8 - 23 µm |
| (b) | Polyéthylène | 6 - 16 g/m² | 7 - 14 g/m² | 8 - 11 g/m² |
| (c) | Aluminium | 4 - 25 µm | 5 - 22 µm | 6 - 20 µm |
| (d) | Polyéthylène | 6 - 50 g/m² | 8 - 45 g/m² | 10 - 40 g/m² |

7. Emballage selon l'une des revendications précédentes, **caractérisé en ce que** la paroi antérieure (20) et la paroi postérieure (30) sont faites du même matériau.

8. Emballage en bande (100) composé d'un grand nombre d'emballages multialvéolaires (10) selon l'une des revendications précédentes.

9. Film ou stratifié pour la fabrication d'un emballage multialvéolaire selon l'une des revendications 1 à 8 ou d'un emballage en bande (100) selon la revendication 8, lequel film ou stratifié comporte la succession de couches suivante :
(a) téréphtalate de polyéthylène - (c) aluminium - (d) polyéthylène ou
(a) téréphtalate de polyéthylène - (b) Polyéthylène - (c) aluminium - (d) polyéthylène, **caractérisé en ce que** le film ou le stratifié comporte, comme couche la plus rigide conférant la stabilité, une couche de matière plastique et seule la couche la plus rigide, conférant la stabilité, du film ou du stratifié comporte la zone d'affaiblissement du matériau (70).

10. Film ou stratifié selon la revendication 9, **caractérisé en ce qu'**au moins une des deux couches soudées contre la couche d'aluminium ou une couche contenant de l'aluminium peut être, en particulier est, conçue comme une couche barrière si la couche d'aluminium ou la couche contenant de l'aluminium est la couche munie de la zone d'affaiblissement du matériau (70), par exemple sous la forme d'une perforation.

11. Film ou stratifié selon l'une des revendications 9 à 10, **caractérisé en ce que** les couches du film ou du stratifié présentent les épaisseurs de couche ou les poids d'application suivants :
| | | Épaisseur de couche ou poids d'application | Épaisseur de couche ou poids d'application préférés | Épaisseur de couche ou poids d'application particulièrement préférés |
|---|---|---|---|---|
| (a) | Téréphtalate de polyéthylène | 4 - 30 µm | 6 - 25 µm | 8 - 23 µm |
| (b) | Polyéthylène | 6 - 16 g/m² | 7 - 14 g/m² | 8 - 11 g/m² |
| (c) | Aluminium | 4 - 25 µm | 5 - 22 µm | 6 - 20 µm |
| (d) | Polyéthylène | 6 - 50 g/m² | 8 - 45 g/m² | 10 - 40 g/m² |

12. Film ou stratifié selon l'une des revendications 9 à 11, **caractérisé en ce que** le film ou le stratifié comporte par sections dans la couche la plus rigide conférant la stabilité, de préférence dans la couche de téréphtalate de polyéthylène, des zones d'affaiblissement du matériau (70) qui sont écartées les unes des autres de telle manière que la ou les zones d'affaiblissement du matériau (70) s'étendent, pendant et après la fabrication de l'emballage multialvéolaire (10) ou de l'emballage en bande (100), par-dessus une région centrale (80) d'un/de chaque espace de logement (60) et/ou le long d'au moins une section d'une délimitation (90) de l'espace de logement (60) qui entoure latéralement l'espace de logement (60) de l'emballage multialvéolaire (10) ou de l'emballage en bande (100).

13. Film ou stratifié selon l'une des revendications 9 à 12, **caractérisé en ce que** la couche la plus rigide conférant la stabilité est une couche de téréphtalate de polyéthylène.

14. Film ou stratifié selon l'une des revendications 9 à 13, **caractérisé en ce que** le film ou le stratifié comprend des couches de soudage, en particulier des couches de soudage ayant une fonction de barrière, lesquelles couches de soudage sont de préférence des couches de polyoléfine avec des revêtements de barrière, en particulier des couches de copolymère de cyclo-oléfine (COC).

15. Film ou stratifié selon l'une des revendications 9 à 14, **caractérisé en ce qu'**au moins une des couches extérieures, en particulier la couche extérieure lors de l'utilisation comme film ou stratifié d'emballage, est formée par une couche de matière plastique orientée.
